# FASCICULE DE BREVET EUROPEEN

(11) **EP 1 836 761 B1**
(45) Date de publication et mention de la délivrance du brevet: **31.10.2012**
(21) Numéro de dépôt: 06710221.0
(22) Date de dépôt: 09.01.2006
(51) Int. Cl.: H02K 7/102

(54) **ACTIONNEUR A MOTEUR A COURANT CONTINU ET A TRANSMISSION IRREVERSIBLE POUR LA MANOEUVRE D'UN VOLET ROULANT**
STELLANTRIEB MIT GLEICHSTROMMOTOR UND IRREVERSIBLER ÜBERTRAGUNGSVORRICHTUNG ZUM BEWEGEN EINES ROLLLADENS
ACTUATOR COMPRISING A DIRECT-CURRENT MOTOR AND AN IRREVERSIBLE TRANSMISSION DEVICE, WHICH IS USED TO MANOEUVRE A ROLLER SHUTTER

(30) Priorité: 11.01.2005 FR 0500266
(43) Date de publication de la demande: 26.09.2007
(73) Titulaire: Somfy SAS, 74300 Cluses (FR)
(72) Inventeur: BRUNO, Serge, F-74460 Marnaz (FR)
(74) Mandataire: Bugnion Genève
(86) Numéro de dépôt international: PCT/IB2006/000019
(87) Numéro de publication internationale: WO 2006/075222

(56) Documents cités:
- EP-A- 0 381 643
- EP-A- 0 976 909
- EP-A- 1 333 150
- WO-A1-03/081752
- FR-A- 2 720 806
- US-A- 4 811 777
- US-A1- 2003 136 615

## Description

L'invention concerne un actionneur pour la manoeuvre d'un élément mobile du bâtiment.

Ces actionneurs permettent la manoeuvre d'éléments mobiles tels que des portes, des portails, des volets, des stores, des écrans de projection, des trappes de ventilation équipant les bâtiments.

Pour commander les manoeuvres de ces éléments mobiles, il est intéressant de connaître leur position afin de déterminer quand doit être coupée l'alimentation du moteur en fin de course de l'élément ou lorsque celui-ci se trouve en position intermédiaire.

On connaît du brevet US 5,038,087 un procédé s'appliquant à un moteur à courant continu avec balais sur l'induit permettant de déterminer, par comptage, la position déployée d'un store dont la position enroulée est détectée par butée du moteur. Le calcul de la position est effectué par comptage des commutations des lames du collecteur sur les balais du moteur. Cependant, un tel procédé de comptage n'est pas fiable. En effet, dans des conditions de fonctionnement dans lesquelles l'élément mobile tend à entraîner le moteur, le courant d'alimentation du moteur peut s'annuler. Dans ces conditions, il est impossible de détecter des variations du courant et donc de compter les commutations.

On connaît de la demande EP 1 333 150, des procédures de correction permettant de résoudre partiellement les problèmes posés par de tels procédés.

Le but de l'invention est de fournir un actionneur obviant aux inconvénients cités et apportant des améliorations par rapport aux actionneurs connus de l'art antérieur. En particulier, l'actionneur selon l'invention permet la mise en oeuvre de manière fiable d'un procédé de détermination de la position et/ou de la vitesse de rotation d'un arbre d'un moteur à courant continu par comptage des commutations de ses lames de collecteur sur ses balais.

L'actionneur selon l'invention est défini par la revendication 1.

Différents modes de réalisation de l'actionneur selon l'invention sont définis par les revendications dépendantes 2 à 6.

Le dessin annexé représente, à titre d'exemple, un mode de réalisation d'un actionneur selon l'invention et le principe de fonctionnement d'un procédé de comptage des commutations.
La figure 1 est un schéma d'un mode de réalisation d'un actionneur selon l'invention.
La figure 2 est un schéma illustrant le principe d'un procédé de détection des commutations.
La figure 3 est une vue en coupe longitudinale d'un mode de réalisation d'un frein de déblocage utilisé préférentiellement dans l'actionneur selon l'invention.

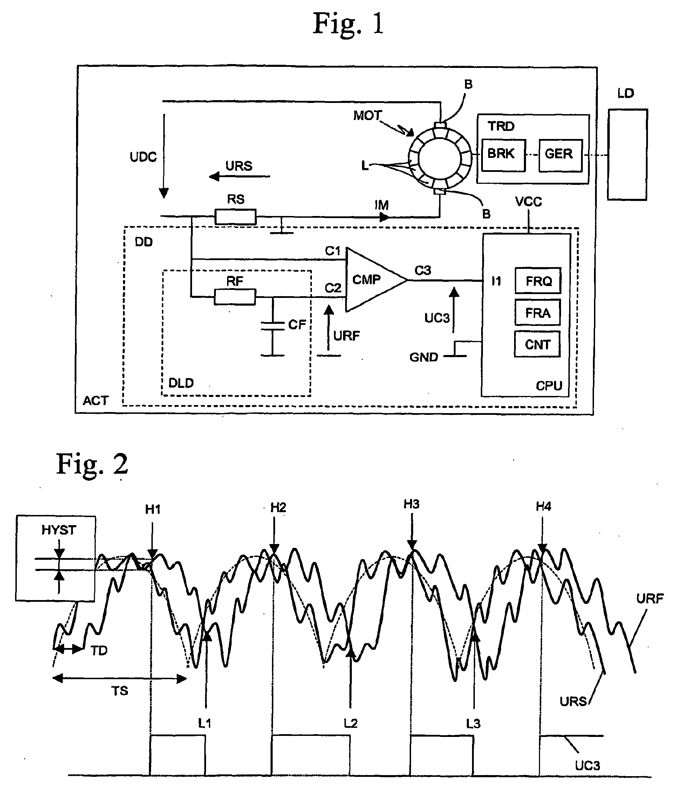

L'actionneur ACT représenté à la figure 1 est destiné à entraîner un élément mobile LD équipant un bâtiment. Il comprend un moteur à courant continu MOT de type à bobinage d'induit au rotor, avec collecteur et balais B. L'inducteur est préférentiellement constitué d'aimants permanents au stator. Le moteur est lié cinématiquement à l'élément mobile par l'intermédiaire d'un dispositif de transmission mécanique TRD. Ce dispositif permet notamment d'immobiliser l'arbre moteur lorsque le moteur n'est pas alimenté afin d'éviter que celui-ci ne soit entraîné par des actions mécaniques exercées par l'élément mobile.

Dans un premier mode de réalisation de l'actionneur, le dispositif de transmission TRD comprend un frein de déblocage BRK et un réducteur GER, par exemple un réducteur à trains épicycloïdaux. Le frein de déblocage a pour effet de contraindre le moteur à absorber un courant non nul pendant toutes les phases de manoeuvre de l'élément mobile et ce, quel que soit le sens ou l'intensité des actions mécaniques exercées par l'élément mobile LD sur le dispositif de transmission TRD.

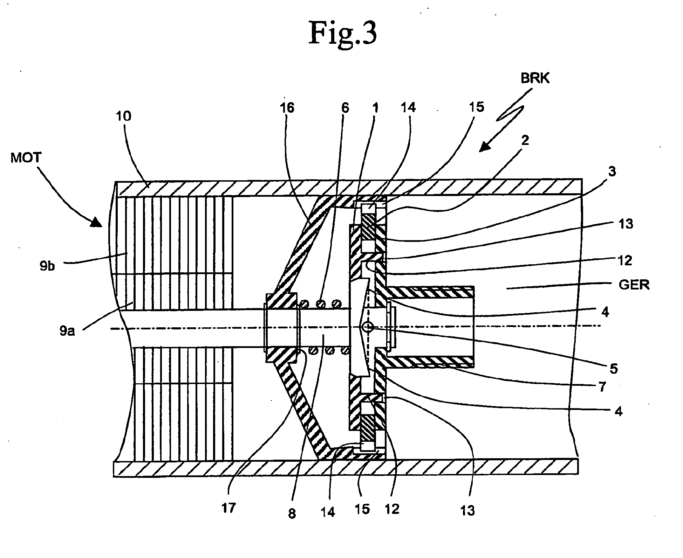

Un exemple de frein de déblocage pouvant être utilisé dans l'actionneur est décrit ci-après en référence à la figure 3.

Le dispositif de frein BRK est disposé entre le moteur MOT et le réducteur GER. Il comprend trois disques de frein 1,2,3 juxtaposés. Deux d'entre eux 1,3 sont montés en liaison pivot sur un arbre 8 portant le rotor du moteur MOT et le dernier est en liaison glissière dans un carter 10 au moyen de saillies radiales 14 coulissant dans des rainures 15 pratiquées dans un support de palier 16 fixé au carter 10. Les disques 1 et 3 sont en liaison glissière entre eux au moyen d'axes 12 présents sur le disque 1 et coulissant dans des alésages 13 pratiqués dans le disque 3. Les trois disques sont maintenus plaqués les uns contre les autres grâce à un ressort 6 prenant appui sur un élément d'arrêt 17 et sur le disque 1. Le disque 3 est solidaire d'un arbre récepteur 7 permettant d'attaquer le réducteur GER. L'arbre 8 du moteur MOT est muni d'un perçage radial dans lequel est logée une goupille 5 faisant saillie. Le disque 1 présente une surépaisseur dans sa zone centrale dans laquelle est formée une surface en forme de double rampe 4, symétrique par rapport au plan perpendiculaire au plan du dessin et contenant l'axe de l'arbre 8, cette surface coopérant avec la goupille 5 pour décoller les disques et pour transmettre le couple de l'arbre 8 au disque 1 lorsque le moteur est alimenté.

Lorsque le moteur MOT n'est pas alimenté, comme représenté sur la figure 1, les trois disques 1,2,3 plaqués les uns contre les autres lient l'arbre récepteur 7 attaquant le réducteur GER au carter 10. Le mouvement de rotation de cet arbre 7 se trouvant interdit, le réducteur GER et, par conséquent, l'élément mobile LD se trouvent bloqués dans leur position.

Lorsque le moteur MOT est alimenté, l'arbre 8 tourne par rapport aux disques 1,2,3 initialement immobiles. Ce mouvement de rotation de l'arbre 8 par rapport au disque 1 amène la goupille 5 en contact avec l'une des rampes 4. L'action de contact entre la goupille 5 et la rampe 4 crée un effort axial contre la poussée du ressort permettant de décoller les disques et, du fait de la pente de la rampe et du couple résistant opposé par le réducteur et le volet roulant, les disques de frein restent écartés. L'action de contact entre la goupille 5 et la rampe 4 crée, du fait de la pente de la rampe 4 et du coefficient de frottement entre la goupille 5 et la rampe 4, un effort tangentiel qui induit un couple mécanique de l'arbre 8 sur le disque 1. De cette manière, le mouvement de rotation de l'arbre 7 est libéré et la puissance mécanique est transmise de l'arbre 8 au réducteur GER via la goupille 5, le disque 1, et le disque 3 et, par conséquent, l'élément mobile LD se trouve entraîné. Dans le cas où l'élément mobile LD a tendance à entraîner le moteur, un léger mouvement de rotation des disques 1 et 3 entraînés par l'arbre 7 par rapport à l'arbre 8 provoque un déplacement de la goupille vers le bas de la rampe 4 et un collage des disques 1, 2 et 3. Le mouvement de la goupille par rapport à la rampe 4 ne peut se poursuivre au-delà de la position dans laquelle la goupille est juste en contact avec la rampe, cette dernière, solidaire du disque 1, étant immobilisée en rotation. De cette manière, une action de l'élément mobile sur le réducteur GER ne peut entraîner le moteur en rotation. Il s'ensuit que, dans un tel dispositif, le fonctionnement du moteur MOT est toujours de type « moteur » et jamais de type « générateur ». De plus, le courant d'alimentation du moteur est toujours supérieur au courant à vide du moteur.

Le frein permet ainsi d'empêcher le mouvement de l'élément mobile LD lorsque le moteur MOT n'est pas alimenté et de transmettre un couple mécanique du moteur MOT au réducteur GER pour manoeuvrer l'élément mobile lorsque le moteur MOT est alimenté.

Dans un deuxième mode de réalisation de l'actionneur (non représenté), le dispositif de transmission TRD est constitué par un réducteur irréversible. Un tel réducteur a pour effet de contraindre le moteur à absorber un courant non nul pendant toutes les phases de manoeuvre de l'élément mobile et ce, quel que soit le sens ou l'intensité des actions mécaniques exercées par l'élément mobile LD sur le dispositif de transmission TRD.

Le moteur MOT est alimenté à partir d'une tension continue UDC, fournie par une batterie ou par un convertisseur non représenté. Cette tension UDC est appliquée aux bornes du moteur grâce à des moyens de commande de l'alimentation comprenant un microcontrôleur CPU commandant des moyens de commutation non représentés permettant de faire tourner le moteur dans un premier sens ou dans un deuxième sens. Le microcontrôleur est relié à un récepteur d'ordres non représenté permettant de détecter des ordres émis suite à une action effectuée par un utilisateur ou suite à un événement détecté par un automatisme.

Une des fonctions des moyens de commande est de couper l'alimentation du moteur lorsque l'arbre de celui-ci a atteint une position particulière, correspondant par exemple à une position intermédiaire prédéfinie ou une position de fin de course de l'élément mobile LD.

La position de l'arbre moteur, et donc celle de l'élément mobile entraîné, est mesurée par comptage. Les moyens de commande provoquent également l'arrêt de l'alimentation du moteur et éventuellement un bref instant d'alimentation inverse pour permettre un mouvement inverse de l'élément mobile en cas de détection d'un obstacle. Cette détection d'obstacle peut, par exemple, être effectuée par une détection d'un ralentissement anormal du moteur. Les moyens de commande doivent donc permettre de calculer la position et la vitesse de l'élément mobile aussi précisément que possible.

L'actionneur représenté à la figure 1 comprend en outre un dispositif DD de détection et de comptage des commutations intervenant entre les balais B et les lames (L) du collecteur.

Dans un mode de réalisation préféré du dispositif de détection et de comptage DD, le courant d'induit IM circulant dans le moteur est mesuré à l'aide d'une résistance shunt RS de faible valeur, dont une borne est reliée à une première borne d'induit du moteur et à la masse électrique GND. Ainsi, la tension de mesure URS aux bornes du shunt est faible devant la tension d'alimentation UDC qui est appliquée au moteur à l'aide de relais non représentés.

Le dispositif de détection et de comptage DD permet de transformer en signal logique à deux niveaux (haut et bas) UC3, les fluctuations du courant d'induit IM provoquées par les commutations des lames L de collecteur lors de leur passage en regard des balais B. Ce dispositif comprend par exemple un comparateur CMP à faible hystérésis HYST et un circuit de déphasage DLD.

La tension URS aux bornes du shunt RS est directement appliquée à une première entrée C1 du comparateur CMP. Cette tension URS est également appliquée à l'entrée d'un circuit de déphasage DLD permettant de retarder d'une durée TD la tension de sortie URF du dispositif par rapport à la tension URS. Ce retard TD est inférieur, voire très inférieur, à la période de commutation TS.

Comme représenté à la figure 1, le dispositif de déphasage peut être réalisé par un simple circuit RC constitué d'une résistance RF en série avec un condensateur CF, la tension de sortie du dispositif de déphasage étant prise aux bornes du condensateur CF. Le produit des valeurs de résistance et de capacité RFxCF, ou constante de temps, est inférieur à la plus faible des périodes de commutation (c'est-à-dire la période de commutation obtenue quand l'arbre moteur tourne à sa vitesse maximum).

Dans une variante préférée, le rapport de la constante de temps à la période la plus faible est égal à 0.3.

La tension retardée URF est appliquée à la deuxième entrée C2 du comparateur CMP.

La sortie C3 du comparateur est raccordée à une entrée numérique I1 du microcontrôleur CPU. Cette entrée permet l'incrémentation par le signal logique UC3 issu du comparateur CMP, d'un compteur CNT lors de chaque passage du signal à l'état haut. L'entrée sert également d'entrée de mesure de la fréquence instantanée des passages à l'état haut. Cette fréquence est stockée dans une mémoire FRQ du microcontrôleur.

Le microcontrôleur est équipé de moyens de comptage, de mesure de fréquence, de calcul glissant de la fréquence moyenne sur un intervalle de temps donné et de calcul de la fréquence de rotation du moteur et/ou de la position du moteur en fonction de la fréquence du signal logique issu du comparateur CMP ou en fonction de la valeur stockée dans le compteur CNT.

L'alimentation du microcontrôleur n'est pas représentée en détail.

La figure 2 représente, en trait pointillé, un signal de tension image du courant d'alimentation qui serait obtenu en absence de tout parasite. Ce signal s'apparente à un signal de courant redressé polyphasé, comprenant autant de « phases » que de lames L au collecteur. La situation représentée est celle d'un régime permanent, c'est-à-dire une situation dans laquelle les conditions de vitesse et de charge sont stabilisées. Le signal de tension URS mesurée aux bornes du shunt RS telle qu'il est réellement obtenu est représenté par une courbe continue, de même que le signal de tension URF retardé, simplement décalé d'un retard TD, faible devant la période de commutation TS.

La représentation donnée sur la figure 2 est simplifiée : en effet, le retard étant obtenu par un circuit RC passe bas, les ondulations parasites de la tension retardée URF devraient figurer avec une amplitude plus faible que celles de la tension de mesure URS.

Les parasites de chaque signal ont ici une amplitude le plus souvent supérieure à l'hystérésis HYST du comparateur. Si la comparaison était faite avec une tension de référence fixe, alors le comparateur basculerait plusieurs fois par période de commutation, d'où des mesures erronées. Augmenter l'hystérésis conduirait à réduire ce type d'erreurs, mais rendrait le montage insensible aux faibles ondulations de courant.

Le fait de comparer le signal de tension URS aux bornes du shunt RS avec un signal quasiment identique mais simplement décalé dans le temps permet d'obtenir un seul passage à l'état haut par période avec une faible ou très faible hystérésis, comparée à l'amplitude des parasites. Ainsi, le premier passage à l'état haut de la tension UC3 de sortie du comparateur CMP a lieu à une date H1, dès que la tension retardée URF dépasse la tension de mesure URS d'une quantité égale à l'hystérésis HYST du comparateur. Le retour à l'état bas a lieu, à une date L1, dès que cette tension URF devient inférieure à la tension URS d'une quantité égale à l'hystérésis.

On comprend que le montage continue à fonctionner lors d'un régime transitoire du courant d'induit IM, par exemple lors d'une croissance importante puis une décroissance du couple moteur. En effet, le régime transitoire correspond à une évolution très lente par rapport à la durée des commutations, et il suffit de considérer la figure 2 avec un léger décalage vers le haut (ou vers le bas) régulier de période de commutation en période de commutation, avec de plus une légère croissance (ou décroissance) de la durée de la période de commutation.

Grâce à l'utilisation d'un frein de déblocage ou d'un réducteur irréversible, on garantit que, même dans une situation de charge entraînante, le fonctionnement du moteur MOT est toujours du type « moteur » et jamais du type « générateur ». Ainsi, pendant une phase d'entraînement donnée de l'élément mobile, le courant dans l'induit du moteur ne s'annule pas, ne change pas de sens et reste éventuellement même supérieur au courant à vide du moteur. Multipliées par la résistance shunt RS, les variations de ce courant sont au moins supérieures à l'hystérésis HYST du comparateur.

Il est évident que de nombreux autres dispositifs de détection et de comptage des commutations peuvent être utilisés dans le cadre de l'invention. On peut par exemple utiliser un dispositif tel que décrit dans le document EP-A1-0 689 054 de la ligne 50 colonne 3 à la ligne 49 colonne 6 en référence à la figure 1 ou tel que décrit dans le document DE 295 09 638 U1 au deuxième paragraphe de la page 5 et à la page 6 en référence à la figure 2. Les contenus de ces documents ainsi que le contenu du document US 5,038,087 sont incorporés par référence à la présente demande. On peut encore utiliser un dispositif dans lequel on compare la tension aux bornes d'un shunt traversé par le courant d'alimentation du moteur avec une tension de référence fixe.

## Revendications

1. Actionneur (ACT) pour la manoeuvre d'un élément mobile (LD) du bâtiment, comprenant :
- un moteur (MOT) à courant continu présentant un induit alimenté via des balais (B) et un collecteur à lames (L) et entraînant l'élément mobile (LD) par le biais d'un dispositif de transmission mécanique (TRD),
- un dispositif (DD) de détection et de comptage des commutations se produisant entre les balais (B) et les lames (L) du collecteur, **caractérisé en ce que**
le dispositif de transmission mécanique (TRD) comprend un élément de transmission (BRK) tel que, lors des phases de manoeuvre de l'élément mobile (LD), quelle que soit l'action mécanique de l'élément mobile (LD) sur le dispositif de transmission (TRD), le courant d'alimentation dans l'induit du moteur (MOT) est toujours non nul et circule toujours dans le sens défini par le fonctionnement « moteur » du moteur (MOT).

2. Actionneur (ACT) selon la revendication 1, **caractérisé en ce que** l'élément de transmission (BRK) est tel que, lors des phases de manoeuvre de l'élément mobile (LD), quelle que soit l'action mécanique de l'élément mobile (LD) sur le dispositif de transmission (TRD), le courant d'alimentation du moteur (MOT) est toujours supérieur au courant à vide du moteur et circule toujours dans le sens défini par le fonctionnement « moteur » du moteur (MOT).

3. Actionneur (ACT) selon l'une des revendications précédentes, **caractérisé en ce que** l'élément de transmission comprend un réducteur irréversible.

4. Actionneur (ACT) selon l'une des revendications précédentes, **caractérisé en ce que** l'élément de transmission comprend un frein de déblocage (BRK).

5. Actionneur (ACT) selon la revendication précédente, **caractérisé en ce que** le frein de déblocage (BRK) est du type à rampe (4).

6. Actionneur (ACT) selon la revendication précédente, **caractérisé en ce que** le frein de déblocage (BRK) comprend des disques de frein (1,2,3) disposés en vis-à-vis, un moyen élastique (6) rappelant les disques les uns contre les autres et des rampes (4) coopérant avec des moyens (5), lorsque l'arbre moteur (8) du moteur (MOT) est entraîné, pour écarter les disques de frein (1,2,3) contre l'action du moyen élastique (6) et pour transmettre un couple mécanique de l'arbre moteur (8) à un arbre récepteur (7) solidaire en rotation de l'un des disques de frein en liaison pivot avec l'arbre moteur (8), l'arbre récepteur étant lié cinématiquement au réducteur (GER) et **en ce qu'**il comprend une juxtaposition de disques alternativement liés à l'arbre moteur (8) et à un carter (10) par des liaisons glissière, les disques des extrémités (1,3) de la juxtaposition étant liés à l'arbre moteur (8).

## Claims

1. An actuator (ACT) for maneuvering a movable element (LD) of a building, comprising:
- a DC motor (MOT) having an armature energized via brushes (B) and a bar commutator with segments (L) and driving the movable element (LD) by way of a mechanical transmission device (TRD),
- a device (DD) for detecting and counting the commutations occurring between the brushes (B) and the bar commutator segments (L),
wherein the mechanical transmission device (TRD) comprises a transmission element (BRK) such that, during the maneuvering phases of the movable element (LD), regardless of the mechanical action of the movable element (LD) on the transmission device (TRD), the supply current in the armature of the motor (MOT) is always non zero and always flows in the direction defined by the "motor" operation of the motor (MOT).

2. The actuator (ACT) as claimed in claim 1, wherein the transmission element (BRK) is such that, during the maneuvering phases of the movable element (LD), regardless of the mechanical action of the movable element (LD) on the transmission device (TRD), the supply current to the motor (MOT) is always greater than the no-load current of the motor and always flows in the direction defined by the "motor" operation of the motor (MOT).

3. The actuator (ACT) as claimed in one of the preceding claims, wherein the transmission element comprises an irreversible reduction gear.

4. The actuator (ACT) as claimed in one of the preceding claims, wherein the transmission element comprises a releasing brake (BRK).

5. The actuator (ACT) as claimed in the preceding claim, wherein the releasing brake (BRK) is of the ramp type (4).

6. The actuator (ACT) as claimed in the preceding claim, wherein the releasing brake (BRK) comprises brake disks (1, 2, 3) disposed opposite one another, an elastic means (6) returning the disks one against another and ramps (4) cooperating with means (5) when the motor shaft (8) of the motor (MOT) is driven, so as to part the brake disks (1, 2, 3) against the action of the elastic means (6) and to transmit a mechanical torque from the motor shaft (8) to a receiving shaft (7) secured in rotation with one of the brake disks pivotably linked with the motor shaft (8), the receiving shaft being kinematically linked to the reduction gear (GER) and wherein it comprises a juxtaposition of disks that are alternately linked to the motor shaft (8) and to a casing (10) by gliding links, the disks of the ends (1, 3) of the juxtaposition being linked to the motor shaft (8).

## Patentansprüche

1. Antriebsvorrichtung (ACT) zur Betätigung eines beweglichen Elements (LD) an einem Gebäude,
- mit einem Gleichstrommotor (MOT), der einen Läufer aufweist, welcher über Bürsten (B) mit Strom versorgt wird, und einen Plattenkollektor (L), wobei der Motor das bewegliche Element (LD) über eine Vorrichtung zur mechanischen Übertragung (TRD) antreibt,
- mit einer Vorrichtung (DD) zur Ermittlung und zum Zählen der Umschaltungen, welche zwischen den Bürsten (B) und den Platten (L) des Kollektors vor sich gehen, **dadurch gekennzeichnet, dass**
die Vorrichtung zur mechanischen Übertragung (TRD) ein Übertragungselement (BRK) derart aufweist, dass während der Phasen der Bewegung des beweglichen Elements (LD), unabhängig von der mechanischen Wirkung des beweglichen Elements (LD) auf die Vorrichtung zur Übertragung (TRD), der Speisestrom im Läufer des Motors (MOT) niemals Null wird und stets in der Richtung fliesst, welche durch den Betriebsmodus "Motor" des Motors (MOT) definiert ist.

2. Antriebsvorrichtung (ACT) gemäss Anspruch 1, **dadurch gekennzeichnet, dass** das Übertragungselement (BRK) derart ausgebildet ist, dass während der Phasen der Bewegung des beweglichen Elements (LD), unabhängig von der mechanischen Einwirkung des beweglichen Elements (LD) auf die Übertragungsvorrichtung (TRD), der Speisestrom des Motors (MOT) stets grösser ist als der Leerlaufstrom des Motors und stets in der Richtung fliesst, welche durch den Betriebsmodus "Motor" des Motors (MOT) definiert ist.

3. Antriebsvorrichtung (ACT) nach einem der vorstehenden Ansprüche, **dadurch gekennzeichnet, dass** das Übertragungselement ein unumkehrbares Reduktionsgetriebe aufweist.

4. Antriebsvorrichtung (ACT) nach einem der vorstehenden Ansprüche, **dadurch gekennzeichnet, dass** das Übertragungselement eine Entblockierungsbremse (BRK) aufweist.

5. Antriebsvorrichtung (ACT) nach vorstehendem Anspruch, **dadurch gekennzeichnet, dass** die Entblockierungsbremse (BRK) als Rampe (4) ausgeführt ist.

6. Antriebsvorrichtung (ACT) nach vorstehendem Anspruch, **dadurch gekennzeichnet, dass** die Entblockierungsbremse (BRK) Bremsscheiben (1, 2, 3) aufweist, die einander gegenüberstehen, weiterhin ein Federmittel (6), welches die Scheiben aneinander drückt, sowie Rampen (4), welche mit den Mitteln (5) zusammenwirken, wenn die Antriebswelle (8) des Motors (MOT) angetrieben wird, um die Bremsscheiben (1, 2, 3) gegen die Wirkung des Federmittels (6) voneinander zu trennen und ein mechanisches Moment von der Antriebswelle (8) auf eine Welle (7) zu übertragen, welche drehschlüssig über eine der Bremsscheibe schwenkbar mit der Antriebswelle (8) verbunden ist, wobei die Welle kinetisch mit dem Reduktionsgetriebe (GER) verbunden ist, und **dadurch gekennzeichnet, dass** die Vorrichtung Scheiben aufweist, die benachbart zueinander angeordnet sind und abwechselnd mit der Antriebswelle (8) verbunden sind, sowie ein Gehäuse (10), welches von Verbindungsgleitern gebildet wird, wobei die äusseren Bremsscheiben (1, 3) der einander benachbarten Scheiben mit der Antriebswelle (8) verbunden sind.
